Europäisches Patentamt

European Patent Office

Office européen des brevets

(11) Veröffentlichungsnummer: **0 411 229 A1**

(12) **EUROPÄISCHE PATENTANMELDUNG**

(21) Anmeldenummer: 89810588.7

(51) Int. Cl.5: **G01N 27/22**

(22) Anmeldetag: 03.08.89

(43) Veröffentlichungstag der Anmeldung:
**06.02.91 Patentblatt 91/06**

(84) Benannte Vertragsstaaten:
**AT BE DE ES FR GB GR IT LU NL SE**

(71) Anmelder: **Ineichen, Martin**
**Lerchenweg 6**
**CH-2556 Schwadernau/BE(CH)**

(72) Erfinder: **Ineichen, Martin**
**Lerchenweg 6**
**CH-2556 Schwadernau/BE(CH)**

(74) Vertreter: **Fischer, Franz Josef et al**
**c/o Bovard AG Optingenstrasse 16**
**CH-3000 Bern 25(CH)**

(54) **Kapazitiver Feuchtefühler.**

(57) Auf einer anodisch oxidierbaren Metallfolie wird eine dünne, als Haftschicht dienende Metalloxidschicht (2) erstellt. Die leicht oxidierte Metallfolie wird bei erhöhter Temperatur und unter Druck auf ein feuchteunempfindliches Substrat (3) aufgepresst. Auf die Metalloxidschicht (2) der dem Substrat (3) abgewandten Seite der Metallfolie wird eine lichtempfindliche Schicht aufgebracht. Mit einem photolithographischen Verfahrensschritt werden die Anzahl und die Strukturen aller Elektroden (1a, 1b) festgelegt. Durch selektives anodisches Oxidieren werden die einzelnen Elektroden (1a, 1b) in der Metallfolie durch durchgehende Metalloxidschichten (5) gebildet. Jede der Elektroden (1a, 1b) wird durch die dünne Metalloxidschicht (2) hindurch mit je einem elektrischen Anschluss (6) versehen. Die feuchteempfindliche Metalloxidschicht (2, 5) bildet das Dielektrikum eines Kondensators, dessen Kapazität feuchteabhängig ist. Der mit wenigen Verfahrensschritten hergestellte, kapazitive Feuchtefühler ist trotz seiner Einfachheit in der gehobenen Güteklasse von Feuchtefühlern anordbar.

Fig.1

## KAPAZITIVER FEUCHTEFÜHLER

Die vorliegende Erfindung betrifft einen kapazitiven Feuchtefühler gemäss dem Oberbegriff des Patentanspruches 1 und ein Verfahren zu dessen Herstellung gemäss dem Oberbegriff des Patentanspruches 6.

Feuchtefühler mit einem ähnlichen Aufbau sind beispielsweise aus der deutschen Offenlegungsschrift 3 339 276 bekannt. Nach dieser Lehre aufgebaute Feuchtefühler zeichnen sich durch grosse Messbereiche und Genauigkeiten und hohe Ansprechgeschwindigkeiten aus. Zur Herstellung solcher Fühler, die fast ausschliesslich ein Polymer als feuchteempfindliche Schicht verwenden, sind relativ viele einzelne Verfahrensschritte notwendig, was dazu führt, dass diese Fühler in der oberen Preisklasse anzutreffen sind. Zum Herstellen eines Feuchtefühlers nach der oben angegebenen Lehre sind beispielsweise zum Strukturieren der direkt auf dem Substrat aufgebrachten Grundelektrode sowie, zum Strukturieren der feuchteempfindlichen Schicht und zum Strukturieren der zweiten Elektrode nacheinander, je nach Ausführungsart, zwei bis drei photolithographische Verfahrensschritte zum Erstellen von Aetzmasken und zwei bis drei Aetzvorgänge notwendig. Dazwischen liegen eine Vielzahl weitere Verfahrensschritte wie Oxidationen, Reinigungen, Wärmebehandlungen usw.

Die deutsche Patentschrift 20 52 456 beschreibt einen kapazitiven Feuchtefühler, der ein Metalloxid als feuchteempfindliche Schicht verwendet. Dieser Fühler ist ohne feuchteunempfindliches Trägermaterial, das der Erhöhung sowohl der mechanischen als auch der elektrischen Stabilität dient, aufgebaut. Um einen anodisch oxidierten Aluminiumdraht ist bei dieser Ausführungsform ein wendelförmig angeordneter Kupferdraht angebracht. Der Aluminiumdraht bildet die erste Elektrode, die Aluminiumoxidschicht dient als feuchteempfindliche Schicht und der um die Aluminiumoxidschicht gewickelte, mit einer Isolationsschicht versehene Kupferdraht bildet die zweite Elektrode. Diese Art Feuchtefühler ist zwar relativ einfach im Aufbau, weist aber wie schon erwähnt den Nachteil einer kleinen mechanischen und elektrischen Stabilität auf. Zudem wird durch die um die feuchteempfindliche Schicht gewickelte Kupferdrahtwendel die Ansprechgeschwindigkeit des Fühlers reduziert.

Es ist die Aufgabe der vorliegenden Erfindung, einen Feuchtefühler mit einem Metalloxid als feuchteempfindliche Schicht mit hoher Ansprechgeschwindigkeit und dank der Verwendung eines Trägermateriales mit hoher mechanischer und elektrischer Stabilität zu schaffen. Der Fühler entspricht wenigstens der Güteklasse der eingangs erwähnten Ausführung und ist durch ein einfaches Herstellverfahren mit einer wesentlich geringeren Anzahl Verfahrensschritte herstellbar.

Die Lösung dieser Aufgabe erfolgt gemäss den Merkmalen in den kennzeichnenden Teilen der Patentansprüche 1 und 6.

Der erfindungsgemässe Feuchtefühler sowie das Verfahren zu dessen Herstellung sind im folgenden anhand von Zeichnungen beispielsweise näher beschrieben. Es zeigen

Fig. 1 eine isometrische Darstellung des Feuchtefühlers und

Fig. 2a - 2h Schnittansichten der verschiedenen Verfahrensschritte bei der Herstellung des in Fig. 1 darge stellten Feuchtefühlers.

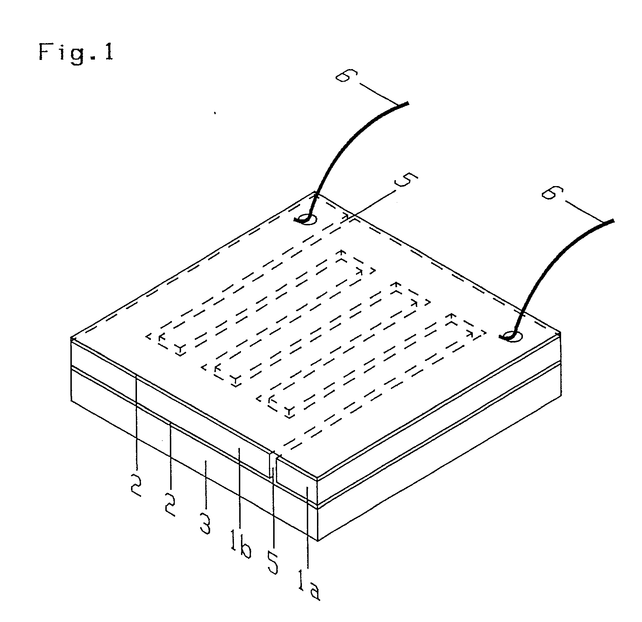

Bei der in der Fig. 1 dargestellten Ausführungsform des erfindungsgemässen kapazitiven Feuchtefühlers ist deutlich ersichtlich, dass jede der aus einem anodisch oxidierbaren Metall bestehenden Elektroden 1a, 1b sowohl auf der dem Substrat 3 zugewandten als auch auf der dem Substrat 3 abgewandten Seite von einer Metalloxidschicht 2 bedeckt ist. Im dargestellten Ausführungsbeispiel sind die beiden kammartig ineinandergreifenden Elektroden 1a, 1b durch eine eine Mäanderstruktur aufweisende, über die ganze Dikke der Elektroden sich erstreckende Metalloxidschicht 5 voneinander getrennt. Die Breite der Metalloxidschicht 5, die Anzahl der einzelnen Elektroden sowie deren Struktur lässt sich mit dem weiter hinten beschriebenen Herstellverfahren bestimmen. Das Metall der Elektroden 1a, 1b hat eine Dicke von etwa 10 Mikrometer. Die dünne Metalloxidschicht 2 weist eine typische Dicke von einem Mikrometer auf. Diese Metalloxidschicht 2 wird durch leichte anodische Oxidation des die Elektroden bildenden Metalles vor dessen Strukturierung und vor der Zusammenfügung mit dem Substrat 3 erstellt. Als anodisch oxidierbares Metall zur Bildung der Elektroden eignet sich beispielsweise Aluminium. Das Substrat 3 eines Feuchtefühlers besteht im gezeigten Ausführungsbeispiel aus Glas, ist plattenförmig ausgeführt und hat eine typische Grösse von 5 x 5 mm² bis 10 x 10 mm², bei einer Dicke von 0,1 bis 0,5 mm. Durch ein spezielles, weiter hinten beschriebenes Verfahren ist die eine Oberflächenseite des Substrates 3 mit der Metalloxidschicht 2 der einen grossen Oberflächenseite des Elektrodenmetalles verbunden.

Jede der Elektroden 1a, 1b ist mit einem elektrischen Anschlussdraht 6 versehen. Die Elektroden werden dabei beispielsweise durch Bonden oder Entladungsschweissen durch die dünne Metalloxidschicht 2 hindurch mit den Anschlussdrähten 6 kontaktiert. Die die Elektroden 1a, 1b teilweise umgebende feuchteemfindliche Metalloxidschicht 2, 5 bildet das Dielektrikum eines Kondensators, dessen Kapazität von der Feuchtigkeit der Umgebungsluft abhängig ist. Versuche haben gezeigt, dass sowohl die sich zwischen den einzelnen Elektroden 1a, 1b befindende Metalloxidschicht 5 als auch die an den Oberflächen vorhandene dünne Metalloxidschicht 2 die. Grösse der Kapazität beeinflussen und unter Feuchtigkeitseinfluss ändern.

Weitere, in den Figuren nicht dargestellte Ausführungsvarianten des Feuchtefühlers sehen vor, diesen in einer anderen Form, beispielsweise als Hohlzylinder oder als Sektor eines Hohlzylinders auszuführen.

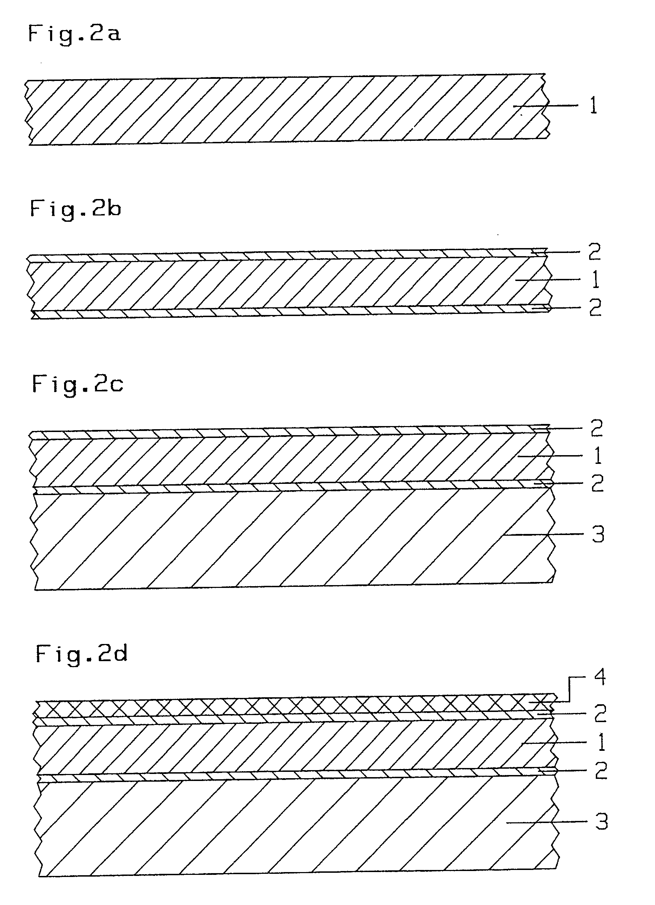

Die einzelnen Verfahrensschritte zur Herstellung des kapazitiven Feuchtefühlers sind im folgenden anhand der Fig. 2a - 2h beschrieben.

Die Fig. 2a zeigt eine anodisch oxidierbare Metallfolie 1, beispielsweise aus Aluminium, deren Oberflächen fettfrei gereinigt sind. In einem nächsten Verfahrensschritt (Fig. 2b) wird durch leichte anodische Oxidation auf der Oberfläche der Metallfolie 1 eine dünne Metalloxidschicht 2 erstellt, deren Dicke etwa 1 Mikrometer beträgt. Diese Oxidschicht 2 dient als Haftschicht beim Aufpressen der Metallfolie 1 auf das Substrat 3. Dieser Schritt ist in der Fig. 2c dargestellt. Die leicht oxidierte Metallfolie 1 wird bei erhöhter Temperatur von etwa 600° C bis 750° C und unter einem hohen Druck von bis zu 10 x 10⁶ Pa (ca. 100 kp pro cm² auf ein Substrat 3 aufgepresst. Dazu wird das vorzugsweise aus Glas bestehende Substrat 3 mit der oben aufgelegten, leicht oxidierten Metallfolie 1 auf eine ebene Heizplatte gebracht und auf die genannte Temperatur aufgeheizt. Eine Pressvorrichtung mit einem parallel zur Heizfläche angeordneten planen Druckstempel presst mit dem obgenannten Druck auf die leicht oxidierte Metallfolie 1. Bei diesem Vorgang entsteht zwischen der auf dem Substrat aufliegenden dünnen Metalloxidschicht 2 und dem Substrat 3 eine feste Verbindung. Damit das Substrat 3 nicht an der Heizfläche und die Metallfolie 1 nicht am Druckstempel anhaften, wird zwischen die Heizfläche und das Substrat 3 sowie zwischen den Druckstempel und die leicht oxidierte Metallfolie 1 je ein anodisch oxidiertes und nachverdichtetes Metallblech gelegt. Für die Verbindung der Metalloxidschicht 2 der Metallfolie 1 mit dem Substrat 3 ist eine möglichst hohe Temperatur anzustreben. Bei der Verwendung von Aluminium als Metallfolie 1 oder als Zwischenlagen zum Verhindern des genannten Anhaftens darf die Temperatur infolge der Schmelztemperatur von Aluminium nicht über 640° C ansteigen.

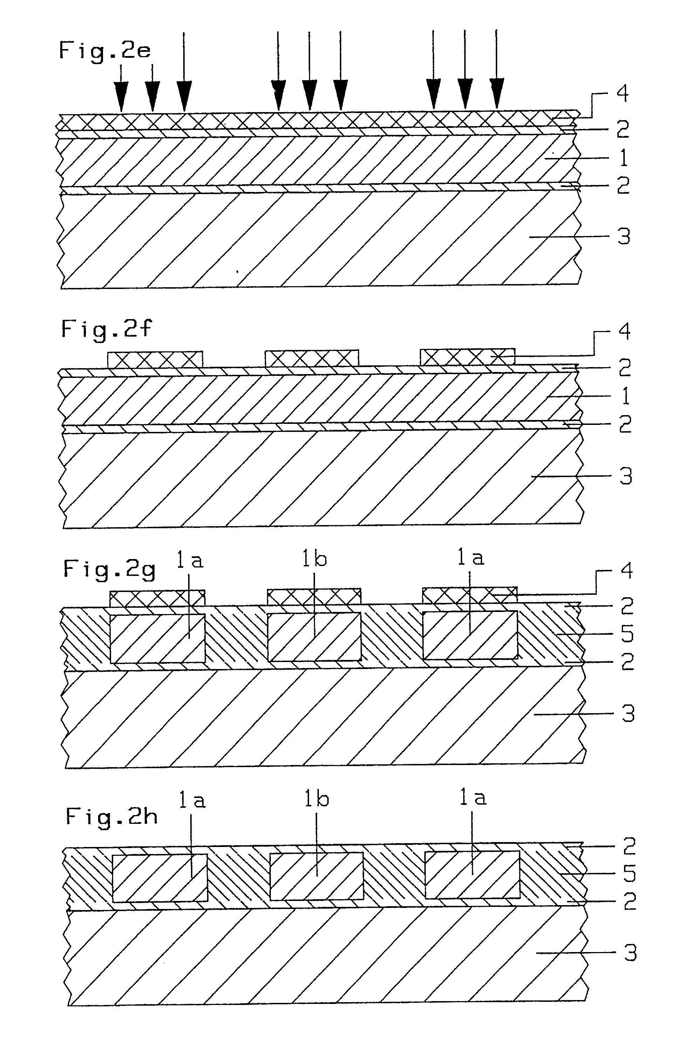

Gemäss den Fig. 2d, 2e und 2f wird auf die dem Substrat 3 abgewandte Seite der Metalloxidschicht 2 der Metallfolie 1 eine lichtempfindliche Schicht 4 aufgebracht. Diese Photoschicht 4 wird mit einer Struktur belichtet, die der gewünschten Struktur der in einem weiteren Schritt herzustellenden Elektroden 1a, 1b entspricht. Die nicht belichteten Teile der Photoschicht 4 werden weggeätzt. In einem bereits erwähnten weiteren Verfahrensschritt (Fig. 2g) wird die ganze Einheit selektiv anodisch oxidiert. Dadurch entstehen durchgehende Metalloxidschichten 5 zwischen metallisch verbleibenden Elektroden 1a, 1b der ursprünglichen Metallfolie 1. Durch das bekannte Verfahren der anodischen Oxidation ist es beispielsweise möglich, je nach Art des Elektrolyten und der Grösse der angelegten elektrischen Spannung, der Metalloxidschicht 5 ganz bestimmte Eigenschaften, wie Grösse der Zellenstruktur, Anzahl der Poren pro Flächeneinheit, zu verleihen. Dadurch ist es denkbar, die Absorptionsfähigkeit der Metalloxidschicht zu variieren und den Feuchtefühler bezüglich Empfindlichkeit einzustellen.

In einem letzten Verfahrensschritt, Fig. 2h, wird die restliche Photoschicht entfernt, der entstandene Feuchtefühler wird gereinigt und in einem Dampfbad unter Druck bei einer Temperatur von bis zu 150° C vorgealtert. Anschliessend werden die einzelnen Elektroden 1a, 1b mit je einem Anschlussdraht 6 durch die dünne Metalloxidschicht 2 hindurch verbunden. Als Verbindungstechnik hat sich Bonden oder Entladungsschweissen als geeignet erwiesen.

Mit dem beschriebenen Verfahren können ein oder mehrere Feuchtefühler gleichzeitig auf dem Substrat 3 hergestellt werden. Die Trennung der einzelnen Fühler erfolgt mit bekannten Verfahren vor dem Anbringen der Anschlussdrähte 6.

Die Anzahl und Form der Elektroden 1a, 1b sind mit einem einzigen photolithographischen Verfahrensschritt bestimmt worden. Mittels dem Verfahren der anodischen Oxidation können zusätzliche Fühlerparameter, beispielsweise die Empfindlichkeit, eingestellt werden. Daraus resultiert ein Feuchtefühler, der in der Aufgabenstellung geforderten Art, der mit wenigen Verfahrensschritten herstellbar ist und eine Vielfalt an möglichen Optimierungsmaxima bietet.

**Ansprüche**

1. Kapazitiver Feuchtefühler mit einem feuchteunempfindlichen isolierenden Substrat (3), wenigstens zwei Elektroden (1a, 1b) und einer feuchteempfindlichen Metalloxidschicht (2, 5), dadurch gekennzeichnet, dass die Metalloxidschicht (2) wenigstens eine der Form einer Oberflächenseite des Substrates (3) entsprechende Oberfläche aufweist, dass die Metalloxidschicht (2) mit dem Substrat (3) über die genannten, sich entsprechenden Flächen verbunden ist, dass die Elektroden (1a, 1b) mindestens auf der dem Substrat (3) zugewandten und auf der dem Substrat (3) abgewandten Seite mit der Metalloxidschicht (2) bedeckt sind, und dass zwischen sich gegenüberliegenden Seiten jeder der Elektroden (1a, 1b) eine Metalloxidschicht (5) vorhanden ist.

2. Kapazitiver Feuchtefühler nach Anspruch 1, dadurch gekennzeichnet, dass die Elektroden (1a, 1b) aus einem anodisch oxidierbaren Metall, zum Beispiel aus Aluminium bestehen.

3. Kapazitiver Feuchtefühler nach Anspruch 1 oder 2, dadurch gekennzeichnet, dass die Elektroden (1a, 1b) durch die eine mäanderförmige Struktur aufweisende Metalloxidschicht (5) voneinander getrennt sind.

4. Kapazitiver Feuchtefühler nach einem der Ansprüche 1 bis 3, dadurch gekennzeichnet, dass die Metalloxidschicht (2, 5) zwischen, unter und über den Elektroden (1a, 1b) das Dielektrikum eines Kondensators mit feuchteabhängiger Kapazität bildet.

5. Kapazitiver Feuchtefühler nach einem der Ansprüche 1 bis 4, dadurch gekennzeichnet, dass jede der Elektroden (1a, 1b) mit mindestens einem elektrischen Anschlussdraht (6) verbunden ist.

6. Verfahren zum Herstellen eines kapazitiven Feuchtefühlers nach einem der Ansprüche 1 bis 5, dadurch gekennzeichnet, dass auf einer anodisch oxidierbaren Metallfolie (1) eine dünne, als Haftschicht dienende Metalloxidschicht (2) gebildet wird, dass die leicht oxidierte Metallfolie (1) bei einer Temperatur von 600° C bis 750° C und unter einem Druck bis 10 x 10⁶ Pa auf ein Substrat (3) zum Herstellen einer guten Verbindung mit der Oxidschicht (2) aufgepresst wird, und dass in der Metallfolie (1) zum Bilden von strukturierten Elektroden (1a, 1b) durch selektives, anodisches Oxidieren durchgehende Metalloxidschichten (5) erstellt werden.

7. Verfahren nach Anspruch 6, dadurch gekennzeichnet, dass beim Aufpressen der leicht oxidierten Metallfolie (1) unter erhöhter Temperatur und unter dem genannten Druck auf das Substrat (3) zum Verhindern des Anhaftens des Substrates (3) an der Heizfläche bzw. der leicht oxidierten Metallfolie (1) am Druckstempel zwischen das Substrat (3) und die Heizfläche sowie zwischen die leicht oxidierte Metallfolie (1) und den Druckstempel je ein anodisch oxidiertes und nachverdichtetes Metallblech gelegt wird.

8. Verfahren nach Anspruch 6 oder 7, dadurch gekennzeichnet, dass das selektive anodische Oxidieren der Metallfolie (1) nach einem photolithographischen Verfahrensschritt durch Belichten und Entwickeln einer auf der dem Substrat (3) abgewandten Seite auf die Oxidschicht (2) aufgebrachten Photolackschicht erfolgt.

9. Verfahren nach einem der Ansprüche 6 bis 8, dadurch gekennzeichnet, dass auf dem Substrat (3) ein oder mehrere Feuchtefühler gleichzeitig hergestellt werden.

10. Verfahren nach einem der Ansprüche 6 bis 9, dadurch gekennzeichnet, dass elektrische Anschlüsse (6) durch Bonden oder Entladungsschweissen mit den Elektroden (1a, 1b) verbunden werden.

Fig.1

## Fig.2a

1

## Fig.2b

2
1
2

## Fig.2c

2
1
2
3

## Fig.2d

4
2
1
2
3

Fig.2e

Fig.2f

Fig.2g

Fig.2h

Europäisches
Patentamt

# EUROPÄISCHER RECHERCHENBERICHT

Nummer der Anmeldung

EP 89 81 0588

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-2 938 434 (E. OBERMEIER) * Spalte 5, Zeile 54 - Spalte 6, Zeile 26 * | 1 | G 01 N 27/22 |
| A | FR-A-2 538 115 (H.T. KUISMA) * Zusammenfassung * | 1 | |
| A | EP-A-0 054 813 (Y. IMAI) * Zusammenfassung * | 1 | |
| A | US-A-4 429 343 (P.J. FREUD) * Zusammenfassung * | 1 | |
| A | US-A-3 886 415 (J.E. GENTHE) * Zusammenfassung * | 1 | |
| A | GB-A-2 129 717 (M.S. DURSCHLAG) * Zusammenfassung * ----- | 1 | |

| | | | RECHERCHIERTE SACHGEBIETE (Int. Cl.5) |
|---|---|---|---|
| | | | G 01 N |

Der vorliegende Recherchenbericht wurde für alle Patentansprüche erstellt

| Recherchenort | Abschlußdatum der Recherche | Prüfer |
|---|---|---|
| DEN HAAG | 30-03-1990 | DUCHATELLIER M.A. |